Europäisches Patentamt

**European Patent Office**

Office européen des brevets

(11) Veröffentlichungsnummer: **0 264 486 B1**

## EUROPÄISCHE PATENTSCHRIFT

(45) Veröffentlichungstag der Patentschrift: **14.08.91**

(51) Int. Cl.⁵: **F04D 29/44**

(21) Anmeldenummer: **86114820.3**

(22) Anmeldetag: **24.10.86**

(54) Ventilator, insbesondere Rohrventilator.

(43) Veröffentlichungstag der Anmeldung:
**27.04.88 Patentblatt 88/17**

(45) Bekanntmachung des Hinweises auf die
Patenterteilung:
**14.08.91 Patentblatt 91/33**

(84) Benannte Vertragsstaaten:
**AT BE CH DE FR GB IT LI NL SE**

(56) Entgegenhaltungen:
**DE-A- 3 219 453**      **FR-A- 1 530 533**
**FR-A- 2 337 270**      **GB-A- 765 345**
**GB-A- 2 048 382**      **US-A- 2 781 165**
**US-A- 3 102 679**

**PATENT ABSTRACTS OF JAPAN, Band 6, Nr.
20 (M-110)[898], 5. Februar 1982; & JP-A-56
138 496 (TOKYO SHIBAURA DENKI K.K.)
29-10-1981**

(73) Patentinhaber: **Wolter GmbH Maschinen- und
Apparatebau KG
Am Wasen 7
W-7502 Malsch 3(DE)**

(72) Erfinder: **Kresse, Hans Rudolf
Am Wasen 9
W-7502 Malsch 3(DE)**
Erfinder: **Rosenberg, Karl
Lönsweg 5
W-7112 Waldenburg(DE)**

(74) Vertreter: **Geitz, Heinrich, Dr.-Ing.
Postfach 2708 Kaiserstrasse 156
W-7500 Karlsruhe 1(DE)**

Rank Xerox (UK) Business Services

**Beschreibung**

Die Erfindung bezieht sich auf einen Ventilator mit einem von einem Elektromotor angetriebenen Radial-Laufrad und einem dieses aufnehmenden, im wesentlichen rotationssymmetrisch ausgebildeten Gehäuse, das je einen axial gerichteten Ansaug- und Abströmstutzen sowie einen sich von dem das Laufrad umschließenden Bereich zum Abströmstutzen hin verjüngenden Abströmkonus mit einem Leitgitter zum Beruhigen der abfließenden Strömung und zum Umwandeln der im Medienstrom enthaltenen Drallenergie in nutzbare Druckenergie sowie eine den mit dem Laufrad wirkverbundenen Antriebsmotor aufnehmende und mit Öffnungen für die, dazu notwendigen Verbindungs elemente versehene Motorkonsole besitzt. Inbesondere bezieht sich die Erfindung auf einen die vorgenannten Merkmale aufweisenden Rohrventilator.

In der FR-A-2 337 270 ist bereits ein gattungsgemäßer Ventilator beschrieben, der ein motorisch angetriebenes Radial-Laufrad mit axialem Lufteintritt und ein Gehäuse mit je einem axial gerichteten Ansaugund Abströmstutzen sowie einen sich zu letzterem hin verengenden Abströmkonus mit einem Leitgitter besitzt. Die Schaufeln des Leitgitters erstrecken sich zwischen dem Abströmkonus und einem in diesem aufgenommenen Kegelstumpf, an dessen laufradseitigem Ende die Motorkonsole angeordnet und in dem der Antriebsmotor aufgenommen ist.

Ein ganz ähnlicher Ventilator ist aus der US-A-3 102 679 vorbekannt, bei dem eine einen Antriebsmotor aufnehmende Motorkonsole mit einem abströmseitigen Teil und letzteres über sich durch einen Abströmspalt hindurcherstreckende Befestigungsmittel mit einem äußeren Gehäuseteil fest verbunden sind. Ferner erstrecken sich im Abströmspalt zwischen dem abströmseitigen Innenteil und dem äußeren Gehäuseteil Leitschaufeln.

Angesichts der die Leitschaufeln aufnehmenden Einbauten und der zusätzlich erforderlichen Motorkonsole sind die Ventilatoren nach dem vorgenannten Stande der Technik im Aufbau aufwendig und erscheinen insofern verbesserungsbedürftig.

Diese Aufgabe ist dadurch gelöst, daß bei dem Ventilator nach dem Oberbegriff des Patentanspruchs 1 die sich in Abströmrichtung verjüngende Motorkonsole auf den laufradseitigen Längsenden der das Leitgitter bildenden Leitschaufeln angeordnet und einstückig mit letzteren ausgebildet ist.

Bei der Erfindung handelt es sich mithin um die direkte Anordnung der den Antriebsmotor für das Laufrad aufnehmenden Motorkonsole auf den das Leitgitter bildenden Leitschaufeln. Naturgemäß führt dies zu einer im Aufbau einfachen und kostengünstigen Ventilatorgestaltung insofern, als es keiner zusätzlichen Sondereinbauten im Gehäuse für eine Motorhalterung bedarf, die einstückig mit den Leitschaufeln des dem Laufrad abströmseitig nachgeordneten Leitgitters ausgebildet ist.

Als besonders vorteilhaft hat sich eine Ausgestaltung erwiesen, bei der ein Gehäuseteil mit dem sich zum Abströmstutzen hin verjüngenden Abströmkonus einstückig mit den Leitschaufeln des Leitgitters und der Motorkonsole ausgebildet ist.

Bei dieser Ausgestaltung bilden mithin der Gehäuseteil mit dem Abströmstutzen und dem sich zu letzterem hin verengenden Abströmkonus, das Leitgitter und die Motorkonsole eine bauliche Einheit, so daß es für den Aufbau eines Ventilators nach dieser Ausgestaltung lediglich der Montage eines mit einem Laufrad wirkverbundenen Antriebsmotors auf der Konsole und des Zusammenfügens des Gehäuses bedarf.

Als zweckmäßig bei dieser Ausgestaltung hat sich ferner erwiesen, das Gehäuseteil mit dem sich zum Abströmstutzen hin verjüngenden Abströmkonus, die das Leitgitter bildenden Leitschaufeln (Hier sollen sich die ursprünglichen Beschreibungsseiten 4 bis 9 unverändert anschließen) und die Motorkonsole einstückig als Kunststoff-Spritzteil auszuführen.

Eine andere Weiterbildung des erfindungsgemäßen Ventilators ist durch eine zweiteilige Gehäuseausbildung sowie dadurch gekennzeichnet, daß sich die Motorkonsole etwa in der von einer Teilungsfuge zwischen den beiden Gehäuseteilen aufgespannten Ebene erstreckt. Eine zweiteilige Gehäuseausbildung ist zwar bei dem eingangs erläuterten Ventilator nach dem Stande der Technik gleichfalls verwirklicht, aber nicht in der Form, daß mit dem den Abströmkonus aufweisenden Gehäuseteil die das Leitgitter bildenden Leitschaufeln und die auf deren laufradseitigen Enden aufgenommene Motorkonsole einstückig ausgebildet sind.

Bei der zuletzt genannten Weiterbildung der Erfindung hat sich auch als vorteilhaft erwiesen, wenn die Motorkonsole aus einem mit den Leitschaufeln verbundenen Kegelmantel mit zur Abströmseite hinweisender Kegelspitze und aus Lagerböken besteht, die sich innerhalb des Kegelmantels aus diesem herauswachsend bis etwa in den Bereich der Teilungsebene zwischen den Gehäuseteilen erstrecken und den Antriebsmotor aufnehmen.

Ebenfalls vorteilhaft bei der vorgenannten Weiterbildung ist, wenn die Leitschaufeln mit ihren laufradseitigen Enden etwa bis zur Teilungsfuge zwischen den beiden Gehäuseteilen und unter Ausbildung eines Ringspaltes bis nahe an eine dem axial gerichteten Laufradeinlaß gegenüberliegende Laufradscheibe heranreichen, die unmittelbar mit dem auf der Motorkonsole aufgenommenen Elektromotor wirkverbunden ist. Bei diesem Elektromotor kann es sich insbesondere um einen Außenläufermotor handeln.

Indem die laufradseitigen Enden der im Abströmkonus des einen Gehäuseteils aufgenommenen Leitschaufeln unter Ausbildung eines Ringspaltes bis nahe an das Laufrad heranreichen, ist sichergestellt, daß die vom Laufrad abfließende Strömung alsbald unter Vermeidung von energieverzehrenden Wirbelbildungen ausgerichtet und dadurch die der Strömung innewohnende Drallenergie in statischen Druck umgesetzt wird. Dabei hat sich als vorteilhaft erwiesen, wenn die Leitschaufeln des Leitgitters abströmseitig vom Laufrad bis in den sich an den Abströmkonus anschließenden Abströmstutzen hineinreichen.

Eine Ausführungsform der Erfindung soll nachstehend anhand der beigefügten Zeichnung erläutert werden. In schematischen Ansichten zeigen:

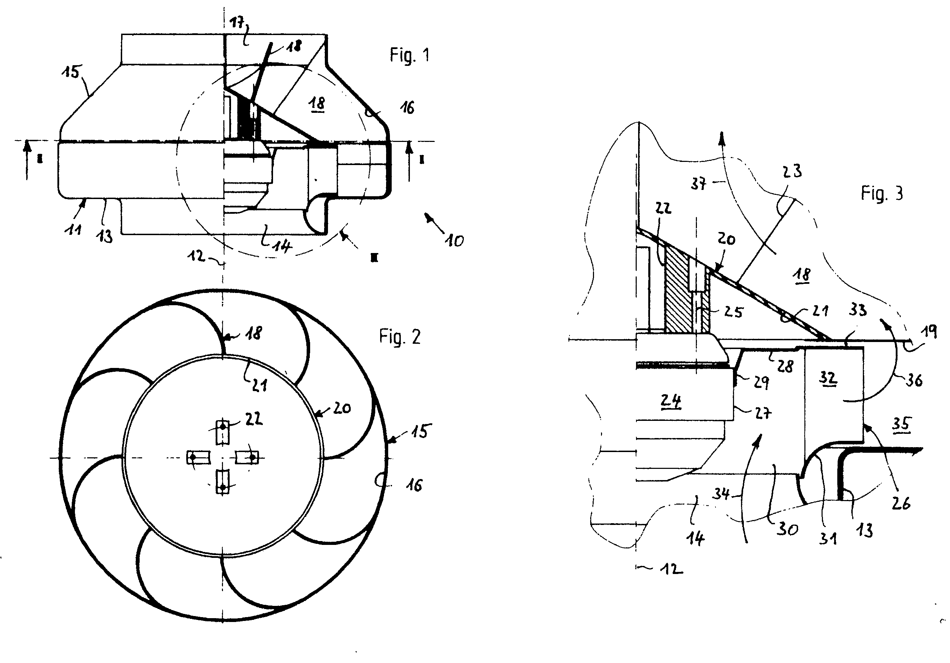

Fig. 1 einen zur Hälfte in einem in Richtung der Ventilatorachse verlaufenden Schnitt und zur Hälfte in einer Ansicht dargestellten Rohrventilator mit einem motorisch angetriebenen Radial-Laufrad und einem letzterem abströmseitig nachgeschalteten Abströmkonus, der zum Ausrichten und Beruhigen der von Laufrad abfließenden Strömung und zum Umsetzen der in dieser Strömung enthaltenen Drallenergie in statischen Druck mit einem Leitgitter aus über den Umfang verteilt angeordneten Leitschaufeln versehen ist,

Fig. 2 in einem Querschnitt gemäß der Schnittlinie II-II in Fig. 1 durch den Ventilator die Ausbildung und Anordnung der Leitschaufeln des Leitgitters im Abströmkonus des Gehäuses und

Fig. 3 in einer stark vergrößerten Ausschnittansicht gemäß III. in Fig. 1 die Anordnung einer auf den laufradseitigen Enden der Leitschaufeln aufgenommenen und mit den Leitschaufeln und einem den Abströmkonus enthaltenden Gehäuseteil einstückig ausgebildeten Motorkonsole sowie die Anordnung eines Antriebsmotors auf der Motorkonsole und eines mit dem als Außenläufermotor ausgebildeten Antriebsmotor wirkverbundenen Laufrades.

Der in Fig. 1 in seiner Gesamtheit veranschaulichte Rohrventilator 10 besitzt ein Gehäuse 11, das rotationssymmetrisch zu einer Längsachse 12 des Ventilators ausgebildet und aus einem Gehäusevorderteil 13 mit einem axial gerichteten Einlaufstutzen 14 und einem abströmseitigen Gehäusehinterteil 15 besteht. Die beiden Gehäuseteile 13, 15 sind in einer sich quer zur Längsachse des Ventilators erstreckenden Teilungsebene miteinander verbunden und das Gehäusehinterteil 15 bildet einen Abströmkonus 16, der sich etwa von der Teilungsebene zwischen den beiden Gehäuseteilen zu einem den Anschluß an eine nicht gezeigte Rohrleitung vermittelnden Abströmstutzen 17 hin verengt.

In dem sich zu dem Abströmstutzen 17 hin verjüngenden Abströmkonus 16 des Gehäusehinterteils 15 sind unter einer vorbestimmten Teilung zueinander Leitschaufeln 18 angeordnet, die ein Leitgitter bilden und mit ihren Eintrittskanten 19 etwa bis in den Bereich der Teilungsebene zwischen den beiden Gehäuseteilen 13, 15 reichen. Mit den Leitschaufeln ist eine Motorkonsole 20 verbunden, die einstückig mit den Leitschaufeln und dem den Abströmkonus 16 aufweisenden Gehäusehinterteil 15 ausgeführt ist. Bei der gezeigten Ausführungsform handelt es sich dabei um ein Kunststoff-Spritzteil. Die Motorkonsole ist in der Art eines mit seiner Spitze zum Abströmstutzen 17 hinweisenden Kegelmantels 21 mit vier unter 90° zueinander angeordneten Lagerböcken 22 ausgebildet, die sich innerhalb des Kegelmantels axial bis etwa in die Teilungsebene zwischen den Gehäuseteilen forterstrecken. Die Leitschaufeln 18 erstrecken sich abströmseitig bis in den sich an den Abströmkonus 16 anschließenden Abströmstutzen 17 hinein. Die abströmseitigen Kanten 23 der Leitschaufeln 18 erstrecken sich gegenläufig zu dem Abströmkonus 16 von der Motorkonsole 20 fort und liegen auf einem -gedachten-Kegelmantel, der sich zum Abströmstutzen 17 hin öffnet.

Auf den Lagerböcken 22 der Motorkonsole 20, die in radialem Abstand vom Gehäuse und unter Ausbildung eines axial gerichteten Zuströmweges zu den Leitschaufeln 18 endet, ist ein Antriebsmotor 24 für ein fluchtend zur Längsachse 12 des Ventilators innerhalb des Gehäusevorderteils 13 drehbar gelagertes Radial-Laufrad 26 aufgenommen. Befestigt ist der Antriebsmotor auf den Lagerböcken mittels diese in axial gerichteten Ausnehmungen 25 durchdringenden Befestigungsschrauben, die in der Zeichnung nicht gezeigt sind. Bei dem Antriebsmotor 24 handelt es sich um einen als Außenläufermotor ausgebildeten Elektromotor. Mit dem Außenläufer 27 des Antriebsmotors 24 ist eine sich etwa in der Teilungsebene zwischen den beiden Gehäuseteilen 13,15 erstreckende Bodenscheibe 28 des Laufrades 26 mittels eines an die Bodenscheide angeformten Kragens 29 dreh- und axialfest verbunden. Eine axial gerichtete Ansaugöffnung 30 des Laufrades, die von einem ansaugseitigen Deckband 31 begrenzt ist, liegt unmittelbar dem Ansaugstutzen 14 des Gehäusevorderteils 13 gegenüber und die Laufradbeschaufelung besteht aus sich um die Ansaugöffnung 30 herumerstreckenden Radialschaufeln 32, die zwischen der genannten Bodenscheibe 28 des Laufrades und dem ansaugseitigen Deckband 31 aufgenommn sinn, das bis an den Ansaugstutzen 14 des Gehäusevorderteils 13 heranreicht. Die laufradseitigen Eintrittskanten 19 der im Abströmkonus 16 angeordneten Leitschaufeln 18 erstrecken sich unter Ausbildung eines axialen Spaltes 33 bis nahe an die Bodenscheibe 28 des Laufrades 26 heran.

Im Betrieb des Rohrventilators 10 strömt bei um die Längsachse 12 umlaufendem Radial-Laufrad 26 gemäß Pfeil 34 Luft durch den Ansaugstutzen 14 des Gehäusevorderteils 13 in die axiale Ansaugöffnung 30 des Laufrades ein, wird dann von den Radialschaufeln 32 erfaßt und innerhalb des Gehäusevorderteils 13 radial nach außen in den sich zwischen dem Laufrad und dem Gehäusevorderteil erstreckenden Ringraum 35 gefördert, um von dort, wie der Pfeil 36 zeigt, unter einer erneuten Richtungsumlenkung von etwa 90° in den Bereich des von den Leitschaufeln 18 gebildeten Leitgitters einzutreten und dieses zu durchströmen. Dabei wird die von Laufrad abfließende und drallbehaftete Turbulenzströmung beruhigt und die dieser Strömung innewohnende Drallenergie weitgehend in statischen Druck umgewandelt, bevor das geförderte Medium das Leitgitter gemäß Pfeil 37 verläßt und durch den axial gerichteten Abströmstutzen 17 aus dem Ventilator-gehäuse austritt. Der mit seiner Spitze zum Abströmstutzen hinweisende Kegelmantel 21 der Motorkonsole 20 unterstützt dabei die Umsetzung von Drallenergie in statischen Druck und begünstigt somit die Druckrückgewinnung.

Bezugszeichenliste

| | |
|---|---|
| 10 | Rohrventilator |
| 11 | Gehäuse |
| 12 | Längsachse |
| 13 | Gehäusevorderteil |
| 14 | Einlaufstutzen |
| 15 | Gehäusehinterteil |
| 16 | Abströmkonus |
| 17 | Abströmstutzen |
| 18 | Leitschaufeln |
| 19 | Eintrittskanten |
| 20 | Motorkonsole |
| 21 | Kegelmantel |
| 22 | Lagerböcke |
| 23 | abströmseitige Kanten |
| 24 | Antriebsmotor |
| 25 | Ausnehmung |
| 26 | Radial-Laufrad |
| 27 | Außenläufer |
| 28 | Bodenscheibe |
| 29 | Kragen |
| 30 | Ansaugöffnung |
| 31 | Deckband |
| 32 | Radialschaufeln |
| 33 | axialer Spalt |
| 34 | Pfeil |
| 35 | Ringraum |
| 36 | Pfeil |
| 37 | Pfeil |

**Patentansprüche**

1. Ventilator mit einem von einem Elektromotor angetriebenen Radial-Laufrad und einem dieses aufnehmenden, in wesentlichen rotationssymmetrisch ausgebildeten Gehäuse (11), das je einen axial gerichteten Ansaug- und Abströmstutzen (17) sowie einen sich von dem das Laufrad umschließenden Bereich zum Abströmstutzen hin verjüngenden Abströmkonus (16) mit einem Leitgitter zum Beruhigen der abfließenden Strömung und zum Umwandeln der im abfließenden Medienstrom enthaltenen Drallenergie in nutzbare Druckenergie sowie eine den mit den Laufrad wirkverbundenen Antriebsmotor (24) aufnehmende und mit Öffnungen für die, dazu notwendigen Verbindungselemente versehene, Motorkonsole besitzt, insbesondere Rohrventilator,
dadurch gekennzeichnet,
daß die, sich in Abströmrichtung verjüngende, Motorkonsole (20) auf den laufradseitigen Längsenden der das Leitgitter bildenden Leitschaufeln (18) angeordnet und einstückig mit letzteren ausgebildet ist.

2. Ventilator nach Anspruch 1, dadurch gekennzeichnet, daß ein Gehäuseteil (15) mit dem sich zum Abströmstutzen (17) hin verjüngenden Abströmkonus (16) einstückig mit den Leitschaufeln (18) des Leitgitters und der Motorkonsole (20) ausgebildet ist.

3. Ventilator nach Anspruch 2, dadurch gekennzeichnet, daß das Gehäuseteil (15) mit dem sich zum Abströmstutzen (17) hin verjüngenden Abströmkonus (16), die das Leitgitter bildenden Leitschaufeln (18) und die Motorkonsole (20) als Kunststoff-Spritzteil ausgeführt sind.

4. Ventilator nach einem der Ansprüche 1 bis 3, gekennzeichnet durch eine zweiteilige Gehäuseausbildung mit sich rechtwinklig zur Laufradachse (12) erstreckender Teilungsfuge sowie dadurch, daß sich die Motorkonsole (20) etwa in der von der Teilungsfuge zwischen den beiden Gehäuseteilen aufgespannten Ebene erstreckt.

5. Ventilator nach Anspruch 4, dadurch gekennzeichnet, daß die Motorkonsole (20) aus einem mit den Leitschaufeln (18) verbundenen Kegelmantel (21) mit zur Abströmseite hinweisender Spitze und aus Lagerböcken (22) besteht, die sich innerhalb des Kegelmantels aus diesem herauswachsend bis etwa in den Bereich der Teilungsebene zwischen den Gehäuseteilen (13, 15) erstrecken und den Antriebsmotor (24) aufnehmen.

6. Ventilator nach Anspruch 4 oder 5, dadurch gekennzeichnet, daß die Leitschaufeln (18) mit ihren laufradseitigen Eintrittskanten (19) etwa bis zur Teilungsfuge zwischen den beiden Gehäuseteilen (13, 15) und unter Ausbildung eines Ringspaltes (33) bis nahe an eine dem axial gerichteten Laufradeinlaß (30) gegenüberliegende Laufradscheibe (28) heranreichen, die unmittelbar mit den auf der Motorkonsole (20) aufgenommenen Elektromotor (24) wirkverbunden ist.

7. Ventilator nach einem der Ansprüche 4 bis 6, dadurch gekennzeichnet, daß die Leitschaufeln (18) des Leitgitters abströmseitig vom Laufrad (26) bis in den sich an den Abströmkonus (16) anschließenden Abströmstutzen (17) hineinreichen.

## Claims

1. A fan comprising a radial impeller driven by an electric motor, and a housing (11) which is of a substantially rotationally symmetrical configuration and which accommodates the impeller and which has an axially directed intake connection and an axially directed discharge flow connection (17) as well as a discharge flow cone (16) which tapers from the region enclosing the impeller towards the discharge flow connection, with a guide baffle arrangement for smoothing the flow as it flows away and for converting the swirl energy contained in the flow of medium as it flows away into usable pressure energy, and a motor mounting which carries the drive motor (24) operatively connected to the impeller, and which is provided with openings for the connecting elements that are necessary therefor, in particular a tube fan, characterised in that the motor mounting (20) which tapers in the discharge flow direction is arranged on the longitudinal ends, on the impeller side, of the guide vanes (18) forming the guide baffle arrangement, and is formed integrally with the guide vanes.

2. A fan according to claim 1 characterised in that a housing portion (15) with the discharge flow cone (16) which tapers towards the discharge flow connection (17) is formed integrally with the guide vanes (18) of the guide baffle arrangement and the motor mounting (20).

3. A fan according to claim 2 characterised in that the housing portion (15) with the discharge flow cone (16) which tapers towards the discharge flow connection (17), the guide vanes (18) forming the guide baffle arrangement and the motor mounting (20) are in the form of a plastics injection-moulded component.

4. A fan according to one of claims 1 to 3 characterised by a two-part housing configuration with a junction extending perpendicularly to the impeller axis (12), and characterised in that the motor mounting (20) extends substantially in the plane in which the junction between the two housing portions extends.

5. A fan according to claim 4 characterised in that the motor mounting (20) comprises a conical casing (21) connected to the guide vanes (18), with the tip facing towards the downstream side, and mounting members (22) which extend within the conical casing from same substantially into the region of the junction plane between the housing portions (13, 15) and carry the drive motor (24).

6. A fan according to claim 4 or claim 5 characterised in that the guide vanes (18) extend with their intake edges (19) which are towards the impeller substantially to the junction between the two housing portions (13, 15) and, forming an annular gap (33), to close to an impeller disc (28) which is disposed opposite the axially directed impeller inlet (30), the impeller disc (28) being operatively connected directly to the electric motor (24) carried on the motor mounting (20).

7. A fan according to one of claims 4 to 6 characterised in that the guide vanes (18) of the guide baffle arrangement extend on the downstream side from the impeller (26) into the discharge flow connection (17) which adjoins the discharge flow cone (16).

## Revendications

1. Ventilateur, en particulier ventilateur tubulaire comportant une roue radiale entraînée par un moteur électrique, incluse avec celui-ci dans un logement (11) sensiblement à symétrie de révolution comportant un support axial d'aspiration et de sortie (17), la roue radiale se trouvant au voisinage de la sortie dans un cône de sortie de rétrécissement (16) avec une grille de guidage pour la régularisation du flux de sortie et pour transformer l'énergie de torsion en une pression utile, le moteur (24) d'entraînement de la roue montée sur une console de moteur pourvue d'ouvertures et d'éléments de liaison, caractérisé en ce que dans la direction rétrécie de sortie de la console moteur (20) le long de la grille de guidage s'étendent des ailettes (18) monobloc avec la console.

2. Ventilateur selon la revendication 1, caractérisé en ce qu' une partie (15) du logement avec son support de flux de sortie (17) et le cône de rétrécissement de sortie (16) sont monobloc avec les ailettes (18) de la grille de sortie de guidage et la console de moteur (20).

3. Ventilateur selon la revendication 2, caractérisé en ce que la partie (15) du logement avec son support de sortie (17), le cône de réduction (16), la grille constituée par les ailettes (18) et la console moteur (20) sont réalisées en matière synthétique moulée par injection.

4. Ventilateur selon l'une des revendications 1 à 3, caractérisé en ce que une seconde partie du logement comprend une partie perpendiculaire à l'axe (12) de la roue et s'étend de sorte que la console du moteur (20) se trouve maintenue dans un plan entre les deux parties emboîtées.

5. Ventilateur selon la revendication 4, caractérisé en ce que la console (20) du moteur comprend les ailettes (18) reliées un manteau conique (21) et du côté de la sortie des saillies internes et un palier (22) qui, à l'intérieur du manteau conique s'étend sensiblement dans la partie plane entre les deux parties (13, 15) du logement et supporte le moteur d'entraînement (24).

6. Ventilateur selon l'une des revendications 4 ou 5, caractérisé en ce que les ailettes conductrices (18) du côté de la roue d'étendent par leurs bords d'entrée (19) sensiblement jusqu'à la partie d'emboîtement des deux parties (13, 15) du logement et sous une plaque annulaire (33) jusqu'au voisinage d'une entrée axiale (30) de la roue contre la paroi (28) de la roue qui est fonctionnellement et directement relié avec le moteur électrique (24).

7. Ventilateur selon l'une des revendications 4 à 6, caractérisé en ce que les ailettes (18) de la grille de guidage de la roue (26) sont montées à l'intérieur du cône de sortie (16) du support de sortie (17).

Fig. 1

Fig. 2

Fig. 3

EP 0 264 486 B1